# EUROPÄISCHE PATENTSCHRIFT

(11) **EP 3 141 114 B1**
(45) Veröffentlichungstag und Bekanntmachung des Hinweises auf die Patenterteilung: **15.08.2018**
(21) Anmeldenummer: 15184362.0
(22) Anmeldetag: 08.09.2015
(51) Int. Cl.: A01M 7/00

(54) **FLÄCHENAUSBRINGANORDNUNG SOWIE FLÄCHENAUSBRINGSTEUERUNGSVERFAHREN**
AGRICULTURAL SPRAYER AND METHOD
SYSTEME D'EPANDAGE ET PROCEDE D'EPANDAGE

(43) Veröffentlichungstag der Anmeldung: 15.03.2017
(73) Patentinhaber: Herbert Dammann GmbH, 21614 Buxtehude (DE)
(72) Erfinder: Dammann, Nadine, 21614 Buxtehude (DE); von Bargen, Frank, 21640 Bliedersdorf (DE)
(74) Vertreter: Hansen, Jochen

(56) Entgegenhaltungen:
- EP-A1- 2 559 332
- EP-A2- 2 064 948
- WO-A1-98/30088
- FR-A1- 2 813 212
- FR-A1- 2 996 412

## Beschreibung

Die Erfindung betrifft eine Flächenausbringanordnung an einem Fahrzeug, nämlich einer fahrenden Flüssigkeitsverteilvorrichtung, selbstfahrenden oder gezogenen Feldspritze, Pflanzenschutzgerät oder industrieller Spritzmaschine, mit einer Vielzahl von nebeneinander an einem senkrecht zur Arbeitsrichtung vorgesehenen Gestänge angeordneten Ausbringanordnungen, wobei die Ausbringanordnungen ansteuerbar sind und Flüssigkeiten und/oder ausbringbare Feststoffe, Saatgut, Dünger und/oder Salze ausbringen können, wobei das Gestänge in wenigstens drei Gestängeabschnitte unterteilt ist, nämlich einem Hauptgestängerahmen und jeweils einem an den Seiten des Hauptgestängerahmens angeordneten Seitengestängerahmen, das Gestänge über eine Pendelvorrichtung mit dem Fahrzeug verbunden ist, wobei die Pendelvorrichtung ein Pendel in einer Pendelaufnahme für das in Lotrichtung angeordnete Pendel mit einer Lagerung des Pendels in einem ersten Drehpunkt aufweist, das Pendel in dem ersten Drehpunkt gelagert ist und sich senkrecht zur Arbeitsrichtung verstellen, auslenken und/oder auspendeln lässt, und das Pendel einen zweiten Drehpunkt mit einer Lagerung und Aufnahme für den Hauptgestängerahmen aufweist, wobei der Hauptgestängerahmen in dem zweiten Drehpunkt gelagert ist und sich senkrecht zur Arbeitsrichtung verstellen, auslenken und/oder auspendeln lässt.

Ferner betrifft die Erfindung ein Flächenausbringsteuerungsverfahren mit einer erfindungsgemäßen Flächenausbringanordnung.

Aus dem **Stand der Technik** sind unterschiedliche Anordnungen bekannt, um Flüssigkeiten oder dergleichen auf großen Flächen auszubringen. Hierbei sind insbesondere Fahrzeuge bekannt, die Flüssigkeiten und dergleichen ausbringen können, nämlich fahrende Flüssigkeitsverteilvorrichtungen, selbstfahrende oder gezogene Feldspritzen, Pflanzenschutzgeräte oder industrielle Spritzmaschinen.

Beispielsweise ist aus der Druckschrift EP 2 826 366 A1 eine Flüssigkeitsverteilvorrichtung sowie ein Flüssigkeitsflächenausbringverfahren bekannt, wobei Flüssigkeiten insbesondere auf großen Flächen ausgebracht werden können.

Weiter ist aus der DE 10 2009 025 770 A1 ein Fahrgestell für Spezialfahrzeuge bekannt, bei dem fernsteuerbare Vertikalstelleinheiten des Fahrzeugs verwendet werden können, um an einem Hang eine Flüssigkeit oder dergleichen auszubringen.

Zudem ist aus den EP 2 567 607 A2 und FR 2 813 212 A1 jeweils eine landwirtschaftliche Verteilmaschine bekannt, mittels der Flüssigkeiten auf Flächen ausgebracht werden können.

Das **Problem an den im Stand der Technik** bekannten Flächenausbringanordnungen im Sinne dieser Erfindung ist im Wesentlichen die nicht berücksichtigte Oberflächenform der Flächen bzw. des Bestandes, die dazu führt, dass das Fahrzeug mit der daran angeordneten Flächenausbringanordnung leichte Wank-/Pendelbewegungen ausführt, die mit den derzeit bekannten Flächenausbringanordnungen nicht kompensierbar sind. Zudem führen Fahrtrichtungsänderungen ebenfalls zu Wank-/Pendelbewegungen des Gestänges der Flächenausbringanordnung an dem Fahrzeug in Relation zu dem Fahrzeug, so dass es mit den bekannten Flächenausbringanordnungen eigentlich gar nicht möglich ist mit konstantem Abstand das Gestänge über die Oberfläche bzw. den Bestand zu führen. Hier spielen auch die unterschiedlichen Geländestrukturen eine Rolle.

Es wurde insbesondere erkannt, dass bei im Stand der Technik befindlichen Flächenausbringanordnungen Wank- und Pendelbewegungen schon bei bloßem Überfahren von insbesondere landwirtschaftlichen Flächen zu erheblichen Bewegungen des Gestänges führen, wobei insbesondere immer breiter werdende Gestänge immer größere Hübe an deren Enden ausführen, so dass unter Umständen bei einer höheren Arbeitsgeschwindigkeit die Gestänge mit ihren Enden den Boden oder zumindest den Bestand berühren können.

Der vorliegenden Erfindung liegt die **Aufgabe** zugrunde, eine Flächenausbringanordnung sowie ein Flächenausbringsteuerungsverfahren aufzuzeigen, die zum einen eine hohe Arbeitsgeschwindigkeit einer Flächenausbringanordnung ermöglichen und zudem auch Fahrtrichtungsänderungen, insbesondere auch bei höheren Geschwindigkeiten, erlauben, ohne dass das Gestänge zu stark in Wank- und/oder Pendelbewegungen, insbesondere relativ zum Boden, versetzt wird. Ziel ist also mittels der erfindungsgemäßen Flächenausbringanordnung ein nahezu über die gesamte Arbeitsbreite paralleles Verteilen zu ermöglichen, wobei insbesondere auch hohe Arbeitsgeschwindigkeiten zulässig sein sollen. Typischerweise sind bisher im Stand der Technik Arbeitsgeschwindigkeiten von 9 bis 12 km/h üblich, so dass dies ein entsprechendes Hindernis ist. Bevorzugt sollen nunmehr Geschwindigkeiten bis zu 20 km/h realisiert werden können, wobei dies auch insbesondere im hügeligen Gelände möglich sein soll und zudem auch enge Kurven mit höheren Arbeitsgeschwindigkeiten gefahren werden dürfen.

**Gelöst** wird diese Aufgabe mit einer Flächenausbringanordnung gemäß Hauptanspruch sowie einem Flächenausbringsteuerungsverfahren gemäß nebengeordnetem Anspruch.

Der Hauptaspekt der Erfindung ist, dass zwischen Pendelaufnahme / Pendelvorrichtung und Pendel zwei Hydraulikzylinder angeordnet sind, wobei diese Hydraulikzylinder das Pendel zusammen mit dem über die Aufnahme verbundenen Hauptgestängerahmen um den ersten Drehpunkt verschwenken können, und ein Pneumatikzylinder mit seiner ersten Seite am Pendel und seiner zweiten Seite am Hauptgestängerahmen angeordnet ist, wobei der Pneumatikzylinder ein Verschwenken des Hauptgestängerahmens relativ zum Pendel um den zweiten Drehpunkt ermöglicht, verhindert, erlaubt und/oder erschwert.

Hierdurch ist ein sicheres Verteilen und Ausbringen mit einer Geschwindigkeit von 12 km/h und mehr auch im hügeligen Gelände möglich. Das Gestänge liegt auch in engen Kurven parallel zum Bestand, wobei dies bereits bei sehr geringen Abständen von nur 30 cm zum Bestand möglich ist. Ebenso das Fahren in Geradeausfahrt, was in der Regel mit doch erheblichen Pendel-/Wankbewegungen aufgrund des doch oftmals sehr unebenen Untergrundes verbunden ist, ist nahezu wank- bzw. pendelfrei, wobei sich dies auf das Gestänge bezieht, welches über die Fläche gefahren wird.

Aufgrund der Kombination der Hydraulikzylinder, die einen erheblichen Widerstand für die Bewegung des Gestänges relativ zum Fahrzeug darstellen, und somit alleinig keine ausreichende Lageberuhigung des Gestänges relativ zu dem doch stark schaukelnden oder auch wankenden Fahrzeug bewirken können, und dem Pneumatikzylinder, dessen Eigenschaft es ist feine bzw. leichte Bewegungen aufgrund des Mediums Luft zuzulassen, innerhalb der Pendelvorrichtung ist ein lageberuhigter Betrieb des Gestänges erst möglich. Impulse durch seitliche Wankbewegungen des Fahrzeuges werden zugelassen, die jedoch aufgrund der Trägheit mittels des Pneumatikzylinders nahezu keine bis keine Auswirkungen auf die Gestängeausrichtung in Bezug auf das Gelände haben, so dass Bewegungen des Fahrzeugs nicht in das Gestänge kommen können.

Der Pneumatikzylinder stellt den Hauptgestängerahmen um den zweiten Drehpunkt senkrecht zum Pendel, wobei diese Senkrechtstellung auch bei entsprechend schräg gestelltem Pendel realisiert wird.

Die Eigenschaft des Pneumatikzylinders eine gewisse Ausweichmöglichkeit des Gestänges zu kompensieren und somit einen Freiheitsgrad der Bewegung für das Gestänge zu schaffen, führt dazu, dass das Gestänge relativ zu dem sich hin- und herbewegenden Fahrzeug nahezu ruhig ausgerichtet bleibt und somit höhere Arbeitsgeschwindigkeiten insgesamt möglich sind. Impulse aus der Querbeschleunigung des Fahrzeugs gelangen so nicht in das Gestänge, da die Luft des Pneumatikzylinders sich komprimieren lässt und so diese Impulse in Relation zu dem Gelände bzw. dem Bestand eliminiert werden. Im Gegensatz zu einer starren Stange kann der Pneumatikzylinder passiv Impulse abfedern und dient quasi als Schwingungselement, da der Pneumatikzylinder sich komprimieren lässt.

Die Hydraulikzylinder führen das Gestänge parallel zur Zielfläche und können so das Pendel quasi schräg stellen, um das Gestänge der Geländekontur nachzuführen. Eine dynamische Nachführung des Gestänges über der Zielfläche mittels der Hydraulikzylinder ist möglich, wobei auch hier der Pneumatikzylinder in der Lage ist durch die Verstellung hervorgerufene Impulse zu reduzieren bzw. abzufangen, da dieser mit dem Medium Luft arbeitet.

Der Pneumatikzylinder verschafft somit dem Gestänge einen Bewegungsfreiraum, der hilft Impulse des Fahrzeugs zu eliminieren und das Gestänge so zu stabilisieren.

Ferner kann der Pneumatikzylinder auch aktiv angesteuert werden, um beispielsweise vorhersehbare Bewegungen des Fahrzeugs bzw. des Gestänges aufgrund von G-Kräften, die durch Fahrtrichtungsänderungen entstehen, vorwegzunehmen. Beispielsweise arbeiten Fahrzeuge oftmals mit GPS-gestützten Rechnersystemen, die Fahrtrouten für den Bediener vorgeben oder teilweise auch eigenständig den vorgegebenen Fahrtrouten folgen, wobei entsprechende Fahrtrichtungsänderungen, wie beispielsweise eine Kurve oder ein Schlenker im System vordefiniert sind.

In einer Ausführungsform ist der Pneumatikzylinder mittels einer kardanischen Aufhängung bzw. Lagerung an dem Pendel befestigt, um eine ausreichende Bewegungsmöglichkeit zu realisieren.

Zur weiteren Verbesserung können zwischen dem Pendel und dem Hauptgestängerahmen zwei Schwingungsdämpfer zur Schwingungsdämpfung des Hauptgestängerahmens relativ zum Pendel vorgesehen werden, so dass nicht nur alleinig der Pneumatikzylinder entsprechende Impulse vom Gestänge fernhält, sondern in Zusammenarbeit mit den Schwingungsdämpfern derartige Übertragungen von Fahrzeugbewegungen auf das Gestänge effektiv unterbinden.

In einer speziellen Ausgestaltung kann am Pendel eine hebelarmartige Adaptervorrichtung angeordnet sein, an die wiederum die Schwingungsdämpfer als auch die Hydraulikzylinder angeordnet sind. Hierüber ist eine bessere Justage möglich.

Zudem kann bevorzugt eine Höhenverstellvorrichtung an dem Fahrzeug zwischen Pendelvorrichtung und Fahrzeug vorgesehen sein, so dass die Pendelvorrichtung in dessen Höhe relativ zu dem Fahrzeug höhenverstellbar ist.

Hierbei kann das Höhenverstellen über ein Verfahren der Pendelvorrichtung und des daran angeordneten Gestänges in Lotrichtung entlang und mithilfe der Höhenverstellvorrichtung erfolgen. Alternativ ist auch ein Verfahren der Pendelvorrichtung in der Höhe mittels einer Parallelogrammanordnung in Kombination mit hydraulisch wirkenden Zylindern möglich.

Zur Ansteuerung der Hydraulikzylinder und/oder des Pneumatikzylinders können insbesondere Proportionalventile vorgesehen werden, die stätige Übergänge realisieren können, so dass veränderliche Volumenströme möglich werden, um so besser die entsprechenden Zylinder anzusteuern.

Das Pendel kann im zweiten Drehpunkt mit dem Hauptgestängerahmen über eine Verschwenkanordnung verbunden sein, wobei ein Verschwenken des Hauptgestängerahmens in horizontaler Ebene möglich ist. Auf diese Art und Weise können Schwenkbewegungen des Gestänges in Arbeitsrichtung, also eine Drehung um die Pendelachse zumindest leicht zugelassen werden. Hierzu ist es besonders vorteilhaft, wenn diese Verschwenkanordnung mit einer Gummilagerung ausgebildet ist, die nur einen begrenzten Drehbereich zulässt.

Zum Verschwenken der Seitengestängerahmen relativ zum Hauptgestängerahmen können zwischen dem Seitengestängerahmen und dem Hauptgestängerahmen Seitenhydraulikzylinder vorgesehen werden, so dass das Gestänge über dessen komplette Breite an eine komplexe Flächengeometrie angepasst werden kann und so nahezu an jedem Punkt den gleichen Abstand zur Oberfläche hat. Hierzu kann das Gestänge auch in 5, 7 oder 9 Abschnitte aufgeteilt werden, die miteinander über entsprechende Hydraulikzylinder relativ zueinander eingestellt werden können.

Zur Steuerung können Distanzmesssensoren, insbesondere Ultraschallsensoren an dem Hauptgestängerahmen und/oder den Seitengestängerahmen vorgesehen werden, die ihre Informationen an einen zentralen Steuercomputer übermitteln, wobei dieser diese Informationen zur Ansteuerung der Hydraulikzylinder und der Seitenhydraulikzylinder verwendet, um so das Gestänge über dessen gesamte Breite nahezu parallel über die Fläche zu führen.

Weitere besondere Ausgestaltungen sind gegeben, wenn Gyroskope eingesetzt werden, um Fahrtrichtungsänderungen zu detektieren und regulierend mit Hilfe des Pneumatikzylinders G-Kräften entgegenzuwirken und das Gestänge relativ zur Oberfläche zu stabilisieren.

Selbstverständlich können Positionssenoren angeordnet werden, um die entsprechenden Positionen der einzelnen Komponenten als auch des Gestänges zu detektieren. Sämtliche relevanten Stellteilepositionen können erfasst und den zentralen Steuercomputer zur Verfügung gestellt werden.

Das Flächenausbringsteuerungsverfahren mit einer erfindungsgemäßen Flächenausbringanordnung ist dadurch gekennzeichnet, dass eine Ansteuerung der Hydraulikzylinder in Abhängigkeit des Untergrundes bzw. des Bestandes erfolgt, so dass ein Verschwenken des Gestänges mittels der Hydraulikzylinder bei geneigtem Untergrund bzw. Bestand erfolgt und eine Ansteuerung des Pneumatikzylinders wenigstens zeitweise bewusst nicht erfolgt, so dass leichte Pendelbewegungen des Gestänges relativ zum Fahrzeug aufgrund der Gestängeträgheit und der Labilität des Pneumatikzylinders / Kompressibilität der Luft in dem Pneumatikzylinder möglich sind.

Insbesondere das zeitweise bewusste Nichtansteuern des Pneumatikzylinders führt dazu, dass Impulse, die normalerweise ein Verschwenken des Gestänges bewirkt hätten, gerade abgefangen werden, so dass das Gestänge aufgrund dessen Trägheit relativ zum Boden ruhig gehalten werden kann.

Weiter kann der Pneumatikzylinder in Abhängigkeit einer Fahrtrichtungsänderung bzw. einer geplanten Fahrtrichtungsänderung aktiv angesteuert werden, so dass der Pneumatikzylinder einer bevorstehenden Pendel- oder Verschwenkbewegung des Gestänges entgegen wirkt. Dieses Verfahren führt dazu, dass insbesondere Kurvenfahrten mit höheren Arbeitsgeschwindigkeiten möglich sind, wobei das Gestänge optimal und gleichmäßig über dem Boden bzw. dem Bestand in vorgegebener Arbeitshöhe gehalten wird. Selbst in Kurvenfahrten können bei schlechtem Untergrund auftretende Wank- und Pendelbewegungen des Fahrzeugs durch den weiterhin noch zusätzlich passiv wirkenden Pneumatikzylinder effektiv abgefangen werden.

Zusätzlich erfinderisch können die Hydraulikzylinder ergänzend oder alternativ aktiv angesteuert werden um größeren physikalischen Kräften, insbesondere bei Kurvenfahrten entgegenzuwirken.

Selbstverständlich sei angemerkt, dass sowohl die Anordnung als auch das Verfahren auch bei Sonderklappungen des Gestänges, beispielsweise halbe Gestängebreite, funktionieren.

Eine Höhenverstellung und/oder ein Verschwenken kann insbesondere auf Grund von Distanzmessungen erfolgen, wobei hierbei die Höhe / Verschwenkung des Hauptgestängerahmens und/oder der Seitengestängerahmen zur Oberfläche / zum Bestand erfolgen kann.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:

Es zeigen:
- Fig. 1: eine schematische Darstellung eines Ausführungsbeispiels der Flächenausbringanordnung in einer Draufsicht;
- Fig. 2: eine schematische Darstellung eines Ausführungsbeispiels der Flächenausbringanordnung in einer ersten Detailansicht;
- Fig. 3: eine schematische Darstellung eines Ausführungsbeispiels der Flächenausbringanordnung in einer zweiten Detailansicht;
- Fig. 4: eine schematische Darstellung eines Ausführungsbeispiels der Flächenausbringanordnung in einer Seitenansicht;
- Fig. 5: eine schematische Darstellung eines Ausführungsbeispiels der Flächenausbringanordnung in einer Draufsicht mit verschwenktem Gestänge und
- Fig. 6: eine schematische Darstellung eines Ausführungsbeispiels der Flächenausbringanordnung an einem Fahrzeug.

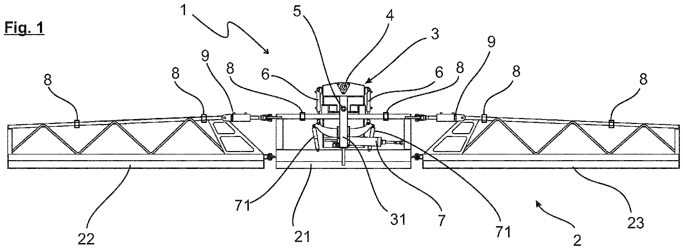

In **Fig.** 1 ist eine schematische Darstellung eines Ausführungsbeispiels der Flächenausbringanordnung 1 in einer Draufsicht dargestellt.

Die Flächenausbringanordnung 1 umfasst die Pendelvorrichtung 3 mit dem Pendel 31, wobei das Pendel 31 im ersten Drehpunkt 4 drehbar gelagert ist.

An dem Pendel 31 ist das Gestänge 2, das in diesem Ausführungsbeispiel aus drei Gestängeabschnitten, nämlich Hauptgestängerahmen 21, linker Seitengestängerahmen 22 und rechter Seitengestängerahmen 23, besteht, über den Hauptgestängerahmen 21 im zweiten Drehpunkt 5 mit dem Pendel 31 verbunden, so dass sich das Gestänge 2 in dem zweiten Drehpunkt 5 um die Pendelachse des Pendels 31 verschwenken kann.

Ferner ist am Pendel 31 ein Hilfsträger angeordnet, an dem zwei Schwingungsdämpfer 71 vorgesehen sind, die den Hilfsträger des Pendels 31 mit dem Hauptgestängerahmen 21 verbinden. Ferner ist an dem Pendel 31 ein Pneumatikzylinder 7 vorgesehen, der in einer bevorzugten Ausführungsform über eine kardanische Lagerung mit dem Pendel 31 verbunden ist.

Weiter sind an dem Hilfsträger des Pendels 31 zwei Hydraulikzylinder 6 angeordnet, die den Hilfsträger und somit das Pendel 31 verschwenken können, da die Hydraulikzylinder 6 ferner noch an der Pendelvorrichtung 3 angeordnet sind, wobei die Pendelvorrichtung 3 quasi mit dem Fahrzeug 0 (hier nicht dargestellt) verbunden ist.

An dem Gestänge sind Ultraschallsensoren 8 vorgesehen, die den Abstand des Gestänges zum Untergrund bzw. zum Bestand detektieren können.

Zudem sind die Gestängeabschnitte 21, 22 und 23 zueinander über Seitenhydraulikzylinder 9 einstellbar, da die Seitenhydraulikzylinder 9 ein Verschwenken der Gestängeabschnitte zueinander, nämlich 21 und 22 bzw. 21 und 23 ermöglichen.

In den nachfolgenden Figuren wird auf die Bezugszeichen der Figur 1 Bezug genommen. Gleiche Bauteile haben die gleichen Bezugszeichen, wobei auf deren prinzipielle Anordnung bzw. Funktionsweise entsprechend der vorherigen Beschreibung und auch der Figurenbeschreibung zu Figur 1 verwiesen wird.

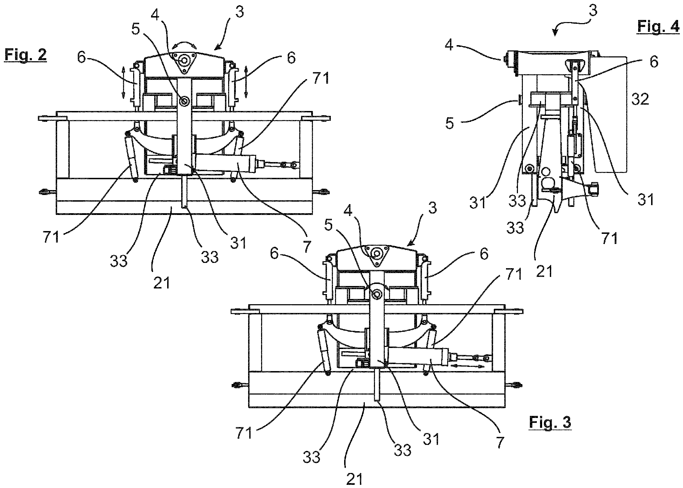

**Fig. 2** zeigt eine schematische Darstellung eines Ausführungsbeispiels der Flächenausbringanordnung 1 in einer ersten Detailansicht.

Hierbei ist das Verschwenken des Pendels 31 mittels der Hydraulikzylinder 6 um den ersten Drehpunkt 4 dargestellt. Durch Druckbeaufschlagung der Hydraulikzylinder 6 erfolgt ein Ausrichten des Pendels 31 und somit auch ein Ausrichten des Gestänges 2 zur relevanten Oberfläche.

In **Fig. 3** ist eine schematische Darstellung eines Ausführungsbeispiels der Flächenausbringanordnung 1 in einer zweiten Detailansicht gezeigt.

Es ist das Verschwenken des Gestänges 2 relativ zur Pendelachse des Pendels 31 gezeigt, wobei ein Verschwenken des Gestänges 2 um den zweiten Drehpunkt 5 erfolgt. Eigentlich ist hier das durch äußere Impulseinwirkung, beispielsweise durch Wanken des Fahrzeugs 0, Verschwenken des Gestänges 2 um den zweiten Drehpunkt 5 sichtbar, wodurch eine Aktion des Gestänges 2 auf den Pneumatikzylinder 7 erfolgt und dieser bewusst eine Bewegung zulässt, da dieser nicht starr ist. Es ist gerade die Kombination aus Pneumatikzylinder 7 und den Hydraulikzylindern 6, die letztendlich das quasi über der relevanten Oberfläche ruhende Gestänge 2 ermöglicht.

**Fig. 4** zeigt eine schematische Darstellung eines Ausführungsbeispiels der Flächenausbringanordnung 1 in einer Seitenansicht.

Hierbei ist der Gesamtaufbau der Pendelvorrichtung 3 in der Seitenansicht dargestellt, wobei zu erkennen ist, dass das Pendel 31 eigentlich aus zwei hintereinander angeordneten Pendelelementen besteht, um die entsprechenden Kräfte des Gestänges zu halten. Ferner ist die Verschwenkanordnung 33 in der Lagerung des Hauptgestängerahmens 21 im zweiten Drehpunkt 5 erkennbar.

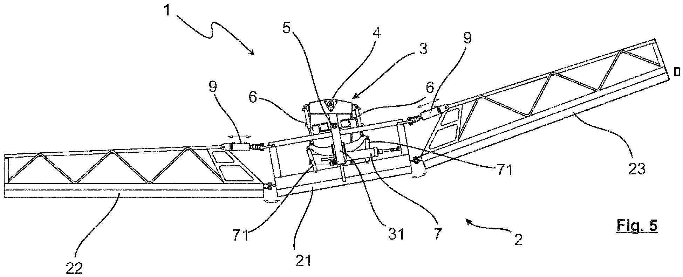

**Fig. 5** zeigt eine schematische Darstellung eines Ausführungsbeispiels der Flächenausbringanordnung 1 in einer Draufsicht mit verschwenktem Gestänge 2.

Das Gestänge 2, bestehend aus dem Hauptgestängerahmen 21 und den beiden Seitengestängerahmen 22 und 23, ist in einem verschwenkten Modus dargestellt, wobei die beiden Seitenhydraulikzylinder 9 der Gestängeanordnung 2 eine entsprechende Verschwenkung der Gestängeabschnitte 21, 22 und 23 zueinander realisieren.

Zudem ist insgesamt das Gestänge 2, zusammen mit dem Pendel 31 der Pendelvorrichtung 3, um den ersten Drehpunkt 4 verschwenkt.

Diese Situation ist beispielsweise für Fahrten der Flächenausbringanordnung 1 an einer Hanglage angebracht.

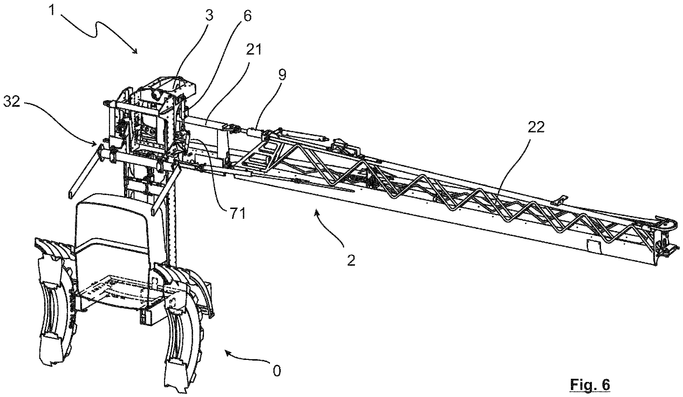

In **Fig. 6** ist eine schematische Darstellung eines Ausführungsbeispiels der Flächenausbringanordnung 1 an einem Fahrzeug 0 dargestellt.

Es ist Fahrzeug 0, nämlich ein Teil eines Anhängers einer Feldspritze dargestellt, nämlich angedeutet Reifen und Anhängergestell sowie ein darauf angeordneter Vorratsbehälter. Am Heck des Anhängers ist eine Höhenverstellvorrichtung 32 vorgesehen, an die die Pendelvorrichtung 3 höhenverstellbar angeordnet ist. Ferner sind der linke Seitengestängerahmen 22 sowie der Hauptgestängerahmen 21 der Flächenausbringanordnung 1 gezeigt.

### Bezugszeichenliste

- 0: Fahrzeug
- 1: Flächenausbringanordnung
- 2: Gestänge
- 21: Hauptgestängerahmen
- 22: linker Seitengestängerahmen
- 23: rechter Seitengestängerahmen
- 3: Pendelvorrichtung
- 31: Pendel
- 32: Höhenverstellvorrichtung
- 33: Verschwenkanordnung
- 4: erster Drehpunkt
- 5: zweiter Drehpunkt
- 6: Hydraulikzylinder
- 7: Pneumatikzylinder
- 71: Schwingungsdämpfer
- 8: Ultraschallsensor
- 9: Seitenhydraulikzylinder

## Patentansprüche

1. Flächenausbringanordnung (1) an einem Fahrzeug (0), nämlich einer fahrenden Flüssigkeitsverteilvorrichtung, selbstfahrenden oder gezogenen Feldspritze, Pflanzenschutzgerät oder industrieller Spritzmaschine, mit einer Vielzahl von nebeneinander an einem senkrecht zur Arbeitsrichtung vorgesehenen Gestänge angeordneten Ausbringanordnungen, wobei die Ausbringanordnungen ansteuerbar sind und Flüssigkeiten und/oder ausbringbare Feststoffe, Saatgut, Dünger und/oder Salze ausbringen können,
wobei
- das Gestänge (2) in wenigstens drei Gestängeabschnitte unterteilt ist, nämlich einem Hauptgestängerahmen (21) und jeweils einem an den Seiten des Hauptgestängerahmens (21) angeordneten Seitengestängerahmen (22, 23),
- das Gestänge (2) über eine Pendelvorrichtung (3) mit dem Fahrzeug verbunden ist, wobei
- die Pendelvorrichtung (3) ein Pendel (31) in einer Pendelaufnahme für das in Lotrichtung angeordnete Pendel (31) mit einer Lagerung des Pendels (31) in einem ersten Drehpunkt (4) aufweist,
- das Pendel (31) in dem ersten Drehpunkt (4) gelagert ist und sich senkrecht zur Arbeitsrichtung verstellen, auslenken und/oder auspendeln lässt,
und
- das Pendel (31) einen zweiten Drehpunkt (5) mit einer Lagerung und Aufnahme für den Hauptgestängerahmen (21) aufweist, wobei der Hauptgestängerahmen (21) in dem zweiten Drehpunkt (5) gelagert ist und sich senkrecht zur Arbeitsrichtung verstellen, auslenken und/oder auspendeln lässt, **dadurch gekennzeichnet, dass** zwischen Pendelaufnahme / Pendelvorrichtung (3) und Pendel (31) zwei Hydraulikzylinder (6) angeordnet sind, wobei diese Hydraulikzylinder (6) das Pendel (31) zusammen mit dem über die Aufnahme verbundenen Hauptgestängerahmen (21) um den ersten Drehpunkt (4) verschwenken können,
und dass ein Pneumatikzylinder (7) mit seiner ersten Seite am Pendel (31) und seiner zweiten Seite am Hauptgestängerahmen (21) angeordnet ist, wobei der Pneumatikzylinder (7) ein Verschwenken des Hauptgestängerahmens (21) relativ zum Pendel (31) um den zweiten Drehpunkt (5) ermöglicht, verhindert, erlaubt und/oder erschwert.

2. Flächenausbringanordnung nach Anspruch 1,
**dadurch gekennzeichnet, dass**
zwischen dem Pendel (31) und dem Hauptgestängerahmen (21) zwei Schwingungsdämpfer (71) zur Schwingungsdämpfung des Hauptgestängerahmens (21) relativ zum Pendel (31) vorgesehen sind.

3. Flächenausbringanordnung nach einem der Ansprüche 1 oder 2,
**dadurch gekennzeichnet, dass**
eine Höhenverstellvorrichtung (32) an dem Fahrzeug (0) zwischen Pendelvorrichtung (3) und Fahrzeug (0) vorgesehen ist, so dass die Pendelvorrichtung (3) in dessen Höhe relativ zu dem Fahrzeug (0) höhenverstellbar ist.

4. Flächenausbringanordnung nach einem der vorangehenden Ansprüche,
**dadurch gekennzeichnet, dass**
zur Ansteuerung der Hydraulikzylinder (6) und/oder des Pneumatikzylinders (7) Proportionalventile vorgesehen sind.

5. Flächenausbringanordnung nach einem der vorangehenden Ansprüche,
**dadurch gekennzeichnet, dass**
das Pendel (31) im zweiten Drehpunkt (5) mit dem Hauptgestängerahmen (21) über eine Verschwenkanordnung (33) verbunden ist, wobei ein Verschwenken des Hauptgestängerahmens (21) in horizontaler Ebene möglich ist.

6. Flächenausbringanordnung nach einem der vorangehenden Ansprüche,
**dadurch gekennzeichnet, dass**
zum Verschwenken der Seitengestängerahmen (22, 23) relativ zum Hauptgestängerahmen (21) zwischen dem Seitengestängerahmen (22, 23) und dem Hauptgestängerahmen (21) Seitenhydraulikzylinder (9) vorgesehen sind.

7. Flächenausbringanordnung nach einem der vorangehenden Ansprüche,
**dadurch gekennzeichnet, dass**
Distanzmesssensoren (8) an dem Hauptgestängerahmen (21) und/oder den Seitengestängerahmen (22, 23) vorgesehen sind.

8. Flächenausbringsteuerungsverfahren mit einer Flächenausbringanordnung nach einem der vorangehenden Ansprüche,
**dadurch gekennzeichnet, dass**
- eine Ansteuerung der Hydraulikzylinder (6) in Abhängigkeit des Untergrundes bzw. des Bestandes erfolgt, so dass ein Verschwenken des Gestänges (2) mittels der Hydraulikzylinder (6) bei geneigtem Untergrund bzw. Bestand erfolgt;
und
- eine Ansteuerung des Pneumatikzylinders (7) wenigstens zeitweise bewusst nicht erfolgt, so dass leichte Pendelbewegungen des Gestänges (2) relativ zum Fahrzeug aufgrund der Gestängeträgheit und der Labilität des Pneumatikzylinders (7) / Kompressibilität der Luft in dem Pneumatikzylinder (7) möglich sind.

9. Flächenausbringsteuerungsverfahren nach Anspruch 8,
**dadurch gekennzeichnet, dass**
eine Ansteuerung des Pneumatikzylinders (7) in Abhängigkeit einer Fahrtrichtungsänderung bzw. einer geplanten Fahrtrichtungsänderung erfolgt, so dass der Pneumatikzylinder (7) einer bevorstehenden Pendel- oder Verschwenkbewegung des Gestänges (2) entgegen wirkt.

10. Flächenausbringsteuerungsverfahren nach Anspruch 8 oder 9,
**dadurch gekennzeichnet, dass**
eine Höhenverstellung und/oder ein Verschwenken auf Grund von Distanzmessungen erfolgt, wobei hierbei die Höhe / Verschwenkung des Hauptgestängerahmens und/oder der Seitengestängerahmen (22, 23) zur Oberfläche / zum Bestand erfolgt.

## Claims

1. A blanket application arrangement (1) on a vehicle (0), namely a moving liquid distribution device, automotive or towed agricultural sprayer, crop protection device or industrial spraying machine, having a plurality of application arrangements arranged next to one another on a linkage provided perpendicularly to the working direction, wherein the application arrangements are controllable and can apply liquids and/or applicable solids, seeds, fertilisers and/or salts,
wherein
- the linkage (2) is divided into at least three linkage portions, namely a main linkage frame (21) and a respective side linkage frame (22, 23) arranged at the sides of the main linkage frame (21),
- the linkage (2) is connected to the vehicle via a pendulum device (3), wherein
- the pendulum device (3) has a pendulum (31) in a pendulum receptacle for the pendulum (31) arranged in the vertical direction with a bearing of the pendulum (31) in a first pivot point (4),
- the pendulum (31) is mounted in a first pivot point (4) and can be adjusted, deflected and/or swung out perpendicularly to the working direction,
and
- the pendulum (31) has a second pivot point (5) with a bearing and receptacle for the main linkage frame (21), wherein the main linkage frame (21) is mounted in the second pivot point (5) and can be adjusted, deflected and/or swung out perpendicularly to the working direction,
**characterised in that**
two hydraulic cylinders (6) are arranged between the pendulum receptacle/pendulum device (3) and the pendulum (31), wherein these hydraulic cylinders (6) can pivot the pendulum (31) together with the main linkage frame (21) connected via the receptacle about the first pivot point (4)
and
**in that** a pneumatic cylinder (7) is arranged with its first side on the pendulum (31) and its second side on the main linkage frame (21), wherein the pneumatic cylinder (7) enables, prevents, allows and/or hinders a pivotal movement of the main linkage frame (21) relative to the pendulum (31) about the second pivot point (5).

2. The blanket application arrangement according to Claim 1,
**characterised in that**
two vibration dampers (71) for vibration damping of the main linkage frame (21) relative to the pendulum (31) are provided between the pendulum (31) and the main linkage frame (21).

3. The blanket application arrangement according to one of Claims 1 or 2,
**characterised in that**
a height adjustment device (32) is provided on the vehicle (0) between the pendulum device (3) and the vehicle (0) so that the height of the pendulum device (3) is vertically adjustable relative to the vehicle (0).

4. The blanket application arrangement according to one of the preceding claims,
**characterised in that**
proportional valves are provided for controlling the hydraulic cylinders (6) and/or the pneumatic cylinder (7).

5. The blanket application arrangement according to one of the preceding claims,
**characterised in that**
the pendulum (31) is connected to the main linkage frame (21) via a pivotal arrangement (33) in the second pivot point (5), wherein a pivotal movement of the main linkage frame (21) in the horizontal plane is possible.

6. The blanket application arrangement according to one of the preceding claims,
**characterised in that**
side hydraulic cylinders (9) are provided between the side linkage frame (22, 23) and the main linkage frame (21) for pivoting the side linkage frames (22, 23) relative to the main linkage frame (21).

7. The blanket application arrangement according to one of the preceding claims,
**characterised in that**
distance measuring sensors (8) are provided on the main linkage frame (21) and/or the side linkage frames (22, 23).

8. A blanket application control method having a blanket application arrangement according to one of the preceding claims,
**characterised in that**
- a control of the hydraulic cylinders (6) according to the ground surface or the crop takes place so that a pivotal movement of the linkage (2) by means of the hydraulic cylinders (6) takes place when there is an incline in the ground surface or crop;
and
- a control of the pneumatic cylinder (7) at least occasionally deliberately does not take place, so that slight swing movements of the linkage (2) relative to the vehicle are possible owing to the linkage inertia and the instability of the pneumatic cylinder (7)/compressibility of the air in the pneumatic cylinder (7).

9. The blanket application control method according to Claim 8,
**characterised in that**
a control of the pneumatic cylinder (7) according to a change in the movement direction or a planned change in the movement direction takes place so that the pneumatic cylinder (7) counteracts an impending swing or pivotal movement of the linkage (2).

10. The blanket application control method according to Claim 8 or 9,
**characterised in that**
a height adjustment and/or a pivotal movement takes place on the basis of distance measurements, wherein the height/ pivotal movement of the main linkage frame and/or the side linkage frames (22, 23) with respect to the surface/crop takes place in this case.

## Revendications

1. Dispositif d'épandage en surface (1) placé sur un véhicule (0), à savoir un dispositif de distribution de liquide en mouvement, un pulvérisateur automoteur ou tracté, un dispositif de protection des cultures ou une machine de pulvérisation industrielle, avec une pluralité de dispositifs d'épandage disposés côte à côte sur une flèche prévue perpendiculairement à la direction de travail, les dispositifs d'épandage pouvant être commandés et pouvant épandre des liquides et/ou des solides, des semences, des engrais et/ou des sels épandables,
dans lequel
- la flèche (2) est divisée en au moins trois sections de flèche, à savoir un cadre de flèche principal (21) et un cadre de flèche latéral (22, 23) disposé de chaque côté du cadre de flèche principal (21),
- la flèche (2) est reliée au véhicule par l'intermédiaire d'un dispositif pendulaire (3),
- le dispositif pendulaire (3) étant muni d'un pendule (31) dans un siège de pendule pour le pendule (31) disposé dans la direction verticale, avec un logement de pendule (31) dans un premier point de pivotement (4),
- le pendule (31) étant logé dans le premier point de pivotement (4) et pouvant être déplacé, dévié et/ou stabilisé par un mouvement pendulaire perpendiculairement à la direction de travail,
et
- le pendule (31) étant muni d'un deuxième point de pivotement (5) avec un logement et palier pour le cadre de flèche principal (21), le cadre de flèche principal (21) étant logé dans le deuxième point de pivotement (5) et pouvant être déplacé, dévié et/ou stabilisé par un mouvement pendulaire perpendiculairement à la direction de travail,
**caractérisé en ce que**
deux vérins hydrauliques (6) sont disposés entre le siège de pendule / dispositif pendulaire (3) et le pendule (31), ces vérins hydrauliques (6) pouvant faire pivoter autour du premier point de pivotement (4) le pendule (31) avec le cadre de flèche principal (21) relié par l'intermédiaire du siège,
et
**en ce qu'**un vérin pneumatique (7) est disposé avec son premier côté sur le pendule (31) et avec son second côté sur le cadre de flèche principal (21), lequel vérin pneumatique (7) permet, empêche, autorise et/ou rend difficile le pivotement autour du second point de pivotement (5) du cadre de flèche principal (21) par rapport au pendule (31).

2. Dispositif d'épandage en surface selon la revendication 1,
**caractérisé en ce que**
deux amortisseurs de vibrations (71) sont prévus entre le pendule (31) et le cadre de flèche principal (21) pour amortir les vibrations du cadre de flèche principal (21) par rapport au pendule (31).

3. Dispositif d'épandage en surface selon l'une des revendications 1 ou 2,
**caractérisé en ce qu'**
un dispositif de réglage en hauteur (32) est prévu sur le véhicule (0) entre le dispositif pendulaire (3) et le véhicule (0) de sorte que la hauteur du dispositif pendulaire (3) peut être réglée par rapport au véhicule (0).

4. Dispositif d'épandage en surface selon l'une des revendications précédentes,
**caractérisé en ce que**
des vannes proportionnelles sont prévues pour commander les vérins hydrauliques (6) et/ou le vérin pneumatique (7).

5. Dispositif d'épandage en surface selon l'une des revendications précédentes,
**caractérisé en ce que**
le pendule (31) est relié dans le deuxième point de pivotement (5) au cadre de flèche principal (21) par un dispositif pivotant (33), le pivotement du cadre de tige principal (21) dans le plan horizontal étant possible.

6. Dispositif d'épandage en surface selon l'une des revendications précédentes,
**caractérisé en ce que**
des vérins hydrauliques latéraux (9) sont prévus entre le cadre de flèche latéral (22, 23) et le cadre de flèche principal (21) pour faire pivoter les cadres de flèche latéraux (22, 23) par rapport au cadre de flèche principal (21).

7. Dispositif d'épandage en surface selon l'une des revendications précédentes,
**caractérisé en ce que**
des capteurs de mesure de distance (8) sont prévus sur le cadre de flèche principal (21) et/ou les cadres de flèche latéraux (22, 23).

8. Procédé de commande d'épandage en surface avec un dispositif d'épandage en surface selon l'une des revendications précédentes,
**caractérisé en ce qu'**
- une commande des vérins hydrauliques (6) est réalisée en fonction du sol ou des cultures de sorte qu'un pivotement de la flèche (2) est réalisé au moyen des vérins hydrauliques (6) lorsque le sol ou la culture sont inclinés ;
et
- une commande du vérin pneumatique (7) n'est volontairement pas réalisée au moins temporairement de sorte que de légers mouvements oscillants de la flèche (2) par rapport au véhicule soient possibles en raison de l'inertie de la flèche et de l'instabilité du vérin pneumatique (7) / de la compressibilité de l'air dans le vérin pneumatique (7).

9. Procédé de commande d'épandage en surface selon la revendication 8,
**caractérisé en ce qu'**
une commande du vérin pneumatique (7) est réalisée en fonction d'un changement de direction de déplacement ou d'un changement planifié de direction de déplacement, de sorte que le vérin pneumatique (7) contrebalance un mouvement pendulaire ou de pivotement imminent de la flèche (2).

10. Procédé de commande d'épandage en surface selon la revendication 8 ou 9,
**caractérisé en ce qu'**
un réglage en hauteur et/ou un pivotement sont réalisés sur la base de mesures de distance, la hauteur / le pivotement du cadre de flèche principal et/ou des cadres de flèche latéraux (22, 23) étant réalisé par rapport à la surface / à la culture.
